Europäisches Patentamt

European Patent Office

Office européen des brevets

(19)

(11) **EP 1 145 086 B1**

(12) **EUROPÄISCHE PATENTSCHRIFT**

(45) Veröffentlichungstag und Bekanntmachung des Hinweises auf die Patenterteilung:
**17.11.2004 Patentblatt 2004/47**

(21) Anmeldenummer: **99942764.4**

(22) Anmeldetag: **01.07.1999**

(51) Int Cl.$^7$: **G05B 1/00**, G06T 7/00

(86) Internationale Anmeldenummer:
**PCT/DE1999/001951**

(87) Internationale Veröffentlichungsnummer:
**WO 2000/003311 (20.01.2000 Gazette 2000/03)**

(54) **VERFAHREN UND ANORDNUNG ZUR ERMITTLUNG EINES ÄHNLICHKEITSMASSES EINER ERSTEN STRUKTUR MIT MINDESTENS EINER VORGEGEBENEN ZWEITEN STRUKTUR**

METHOD AND DEVICE FOR DETERMINING A SIMILARITY OF MEASURE BETWEEN A FIRST STRUCTURE AND AT LEAST ONE PREDETERMINED SECOND STRUCTURE

PROCEDE ET DISPOSITIF POUR LA DETERMINATION D'UNE MESURE DE LA SIMILITUDE ENTRE UNE PREMIERE STRUCTURE ET AU MOINS UNE SECONDE STRUCTURE PREDETERMINEE

(84) Benannte Vertragsstaaten:
**AT BE CH CY DE DK ES FI FR GB GR IE IT LI LU MC NL PT SE**

(30) Priorität: **08.07.1998 DE 19830536**

(43) Veröffentlichungstag der Anmeldung:
**17.10.2001 Patentblatt 2001/42**

(73) Patentinhaber: **SIEMENS AKTIENGESELLSCHAFT**
**80333 München (DE)**

(72) Erfinder:
• **FEITEN, Wendelin**
**D-85579 Neubiberg (DE)**
• **RENCKEN, Wolfgang**
**D-81827 München (DE)**

(56) Entgegenhaltungen:
**EP-A- 0 190 742       EP-A- 0 492 512**
**DE-C- 19 532 104     US-A- 5 414 625**

• **PATENT ABSTRACTS OF JAPAN vol. 1997, no. 6, 30. Juni 1997 (1997-06-30) & JP 09 054828 A (OMRON CORP.), 25. Februar 1997 (1997-02-25)**
• **Y.YAGI ET AL.: "Map-based navigation for mobile robot with omnidirectional image sensor COPIS" IEEE TRANSACTIONS ON ROBOTICS AND AUTOMATION., Bd. 11, Nr. 5, November 1995 (1995-11), Seiten 634-647, XP000539774 IEEE INC, NEW YORK., US ISSN: 1042-296X**
• **C. ASTEASU ET AL.: "Three dimensional world model building and imaging system based on a priori knowledge" COMPUTERS IN INDUSTRY., Bd. 24, Nr. 1, Mai 1994 (1994-05), Seiten 39-54, XP000454381 ELSEVIER SCIENCE PUBLISHERS. AMSTERDAM., NL ISSN: 0166-3615**

Bemerkungen:
Derzeit sind die WIPO-Publikationsdaten A3 nicht verfügbar.

**Beschreibung**

Die Erfindung betrifft die rechnergestützte Ermittlung eines Ähnlichkeitsmaßes einer ersten Struktur mit mindestens einer vorgegebenen zweiten Struktur.

Ein solches Verfahren ist aus [1] bekannt. Bei diesem Verfahren der Bildverarbeitung wird im Rahmen einer Bewegungsschätzung zwischen zwei zeitlich aufeinanderfolgenden Bildern für einen zu codierenden Bildblock in dem zeitlich vorangegangenen Bild ein möglichst dem zu codierenden Bildblock ähnlicher Bildbereich gesucht. Dies erfolgt dadurch, daß eine Summe über die quadratischen Differenzen der den Bildpunkten zugeordneten Codierungsinformation (Helligkeitswert oder Farbwert) der Bildpunkte des zu codierenden Bildblocks und der Bildpunkte in einem untersuchten Bereich in dem zeitlich vorangegangen Bild ermittelt wird. Dies bedeutet, daß zum Vergleich zweier Strukturen in bei diesem Ansatz aus [1] die gesamte erste Struktur (zu codierender Bildblock) mit einer zweiten Struktur (Bereich im zeitlich vorangegangen Bild) in seiner Gesamtheit verglichen wird.

Diese Vorgehensweise ist äußerst aufwendig hinsichtlich des benötigten Speicherplatzbedarfs zur Speicherung der Strukturen sowie hinsichtlich des Rechenzeitbedarfs zur Ermittlung des Ähnlichkeitsmaßes (in diesem Fall ist das Ähnlichkeitsmaß die Summe der quadratischen Differenzen).

Aus [2] ist es bekannt, daß zum Vergleich einer Struktur die Elemente der Struktur als Polygonzüge aufgefaßt werden und die Polygonzüge in ihrer Gesamtheit verglichen werden, wobei Winkel zwischen miteinander verbundenen Elementen der Polygonzüge berücksichtigt werden.

Dieser Ansatz birgt insbesondere den Nachteil in sich, daß er nicht robust ist gegenüber Aufnahmen, die von einem Roboter zu seiner Orientierung in einem vorgegebenen Raum gemacht werden. Der Raum ist in diesem Fall durch eine vorgegebene gespeicherte Landkarte repräsentiert.

Wenn von dem Roboter einige Elemente des Polygonzuges nicht aufgenommen werden, so ist das aus [2] bekannte Verfahren nicht ausreichend robust, um zu Ergebnissen ausreichender Qualität zu führen. Auch ist der für den Vergleich des aufgenommenen Bildes mit der Landkarte, um Strukturen miteinander zu vergleichen, äußerst rechenaufwendig.

Aus [3] ist ein Vergleich von einer Szene mit einer Referenzszene bekannt. Bei diesem Vergleich wird eine Szene beschrieben durch eine Netzstruktur aus Knoten und Knotenverbindungen, wobei den Knoten Objekte der Szene und den Knotenverbindungen Verhältnisse zwischen den Objekten zugeordnet werden. Entsprechend wird die Referenzszene beschrieben. Bei dem Vergleich wird die Netzstruktur der Szene mit der Netzstruktur der Referenzszene verglichen.

Somit liegt der Erfindung das Problem zugrunde, ein Ähnlichkeitsmaß einer ersten Struktur mit mindestens einer vorgegebenen zweiten Struktur zu ermitteln, welches robust ist gegen mögliche Aufnahmefehler sowie schneller durchführbar ist mit geringerem Rechenzeitaufwand als die bekannten Verfahren.

Das Problem wird durch das Verfahren gemäß Patentanspruch 1 sowie durch die Anordnung gemäß Patentanspruch 26 gelöst.

Bei dem Verfahren wird für die erste Struktur und die zweite Struktur jeweils mindestens ein Basiselement definiert. Den Basiselementen wird jeweils Umgebungsinformation zugeordnet, die das entsprechende Basiselement charakterisiert. Für die erste Struktur und die zweite Struktur wird das Ähnlichkeitsmaß ermittelt, mit dem die Ähnlichkeit der ersten Struktur mit der zweiten Struktur beschrieben wird. Die Ermittlung des Ähnlichkeitsmaßes erfolgt abhängig von den Basiselementen sowie von der den Basiselementen zugeordneten Umgebungsinformation.

Die Anordnung weist einen Prozessor auf, der derart eingerichtet ist, daß folgende Schritte durchführbar sind:

- für die erste Struktur und die zweite Struktur wird jeweils mindestens ein Basiselement definiert,
- den Basiselementen wird jeweils Umgebungsinformation zugeordnet,
- die Umgebungsinformation charakterisiert das entsprechende Basiselement,
- für die erste Struktur und die zweite Struktur wird das Ähnlichkeitsmaß ermittelt, mit dem die Ähnlichkeit der ersten Struktur mit der zweiten Struktur beschrieben wird, und
- die Ermittlung des Ähnlichkeitsmaßes erfolgt abhängig von den Basiselementen sowie von der den Basiselementen zugeordneten Umgebungsinformation.

Die Erfindung zeichnet sich durch einen gegenüber dem Stand der Technik erheblich geringeren Rechenzeitbedarf zur Durchführung der Ermittlung des Ähnlichkeitsmaßes sowie durch eine erhöhte Robustheit gegen mögliche Sensorfehler oder Modellierungsfehler aus.

Bevorzugte Weiterbildungen der Erfindung ergeben sich aus den abhängigen Ansprüchen.

Die Strukturen können in einer Landkarte enthalten sein, die mit einem Aufnahmemittel, zum Beispiel einem Laserscanner oder einer Kamera aus der Umgebung als Szene aufgenommen wird. In diesem Fall gilt es, die aufgenommenen Strukturen mit einer gespeicherten Landkarte zu vergleichen, um sich somit zu orientieren oder eine Landkarte aufzubauen, die zur Orientierung eingesetzt werden kann.

Die Genauigkeit des Verfahrens wird erhöht, wenn das Ähnlichkeitsmaß aufgrund mehrerer Basiselemente und deren jeweils zugeordneter Umgebungsinformation ermittelt wird.

In einer weiteren Ausgestaltung der Erfindung ist es vorgesehen, daß zumindest ein Teil der Basiselemente eine Linie, eine Strecke oder auch ein Punkt ist.

Die Umgebungsinformation kann durch weitere Basiselemente und deren geometrische Anordnung relativ zu den Basiselementen gebildet werden.

Die Basiselemente können unterschiedliche Form haben.

Durch eine Weiterbildung der Erfindung, daß mindestens ein Teil der Umgebungsinformation derart gebildet wird, daß sie invariant ist gegen Fehler, die beim Aufbau der Landkarte auftreten, wird eine weitere qualitative Verbesserung der Ergebnisse erzielt.

Eine weitere Vereinfachung der Erfindung kann dadurch erreicht werden, daß in einer bevorzugten Weiterbildung die weiteren Basiselemente in mehrere Umgebungsinformationstypen gruppiert werden, die Umgebungsinformationsmerkmale enthalten, welche jeweils einem Umgebungsinformationstyp zugeordnet werden.

Die einem Umgebungsinformationstypen zugeordneten Umgebungsinformationsmerkmale können in einer Liste in einer vorgebbaren Weise sortiert gespeichert werden.

Die Sortierung kann so ausgeführt werden, daß sie invariant gegen die oben dargestellten Fehler beim Aufbau der Landkarte ist.

Bevorzugt wird das Ähnlichkeitsmaß mittels dynamischer Programmierung ermittelt.

Die Strukturen können jeweils ein physikalisches Objekt, beispielsweise einen aufgenommenen Raum oder auch eine aufgenommene Szene sowie beispielsweise Wände, Türen, oder beliebige andere Objekte, beschreiben.

Es ist in einer Alternative ebenso möglich, daß die erste Struktur ein physikalisches Objekt beschreibt und die zweite Struktur ein Modell eines physikalischen Objekts.

Die Strukturen können ferner Datenstrukturen in einer Datenbank repräsentieren.

Die Erfindung kann bevorzugt eingesetzt werden zur Orientierung einer mobilen autonomen Vorrichtung oder auch zur Ermittlung einer Landkarte zur Orientierung dieser Vorrichtung.

In einer bevorzugten Weiterbildung ist die autonome Vorrichtung ein Roboter.

Ausführungsbeispiele der Erfindung sind in den Figuren dargestellt und werden im weiteren näher erläutert.

Es zeigen

Figuren 1a und 1b      eine Skizze eines Gangs, in dem sich ein Roboter orientieren soll (Figur 1a) sowie eine symbolische Skizze der Aufnahmen des Roboters und dessen Umsetzung in eine Landkarte, wobei ein Fehler bei der Ermittlung der Landkarte und dessen Auswirkungen auf die Abbildung des Gangs gegenüber dem tatsächlichen Gang aus Figur 1a dargestellt ist (Figur 1b);

Figur 2      eine Skizze eines Roboters mit Aufnahmemitteln;

Figuren      3a bis 3c Skizzen jeweils eines Basiselements mit verschiedenen Umgebungsinformationstypen und Umgebungsinformationsmerkmalen;

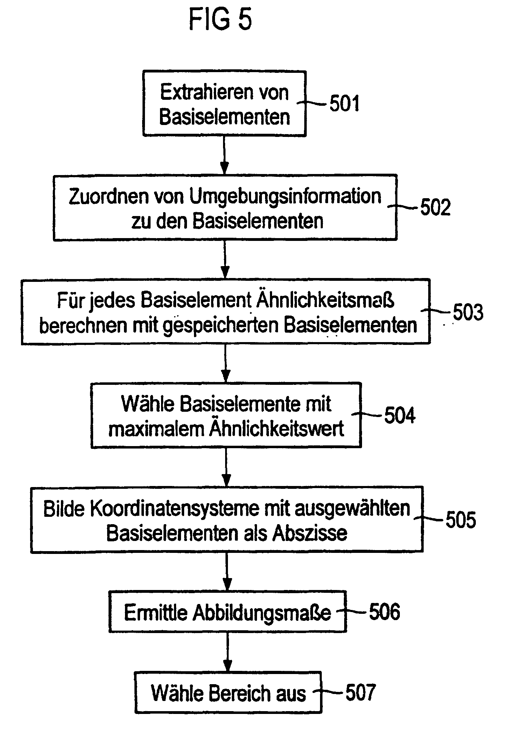

Figur 4      eine Skizze in der eine Anwendung des Verfahrens dargestellt ist, bei der eine Struktur ein Modell eines physikalischen Objekts darstellt;

Figur 5      ein Ablaufdiagramm, in dem Verfahrensschritte eines Ausführungsbeispiels dargestellt sind.

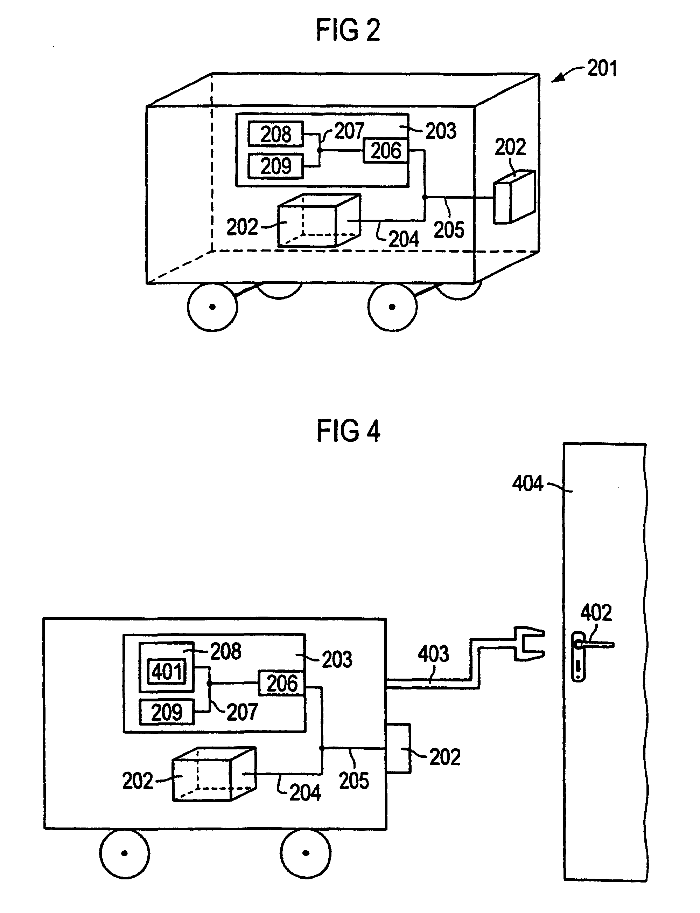

**Fig.2** zeigt einen Roboter 201 mit mehreren Laserscannern 202. Die Laserscanner 202 nehmen Bilder einer Umgebung des Roboters 201 auf und führen die Bilder einer Recheneinheit 203 über Verbindungen 204, 205 zu.

Über eine Eingangs-/ Ausgangsschnittstelle 206, die über einen Bus 207 mit einem Speicher 208 sowie einem Prozessor 209 verbunden ist, werden die Bildsignale dem Speicher 208 zugeführt.

Das im weiteren beschriebene Verfahren wird in dem Prozessor 209 durchgeführt. Somit ist der Prozessor 209 derart eingerichtet, daß die im weiteren beschriebenen Verfahrensschritte durchführbar sind.

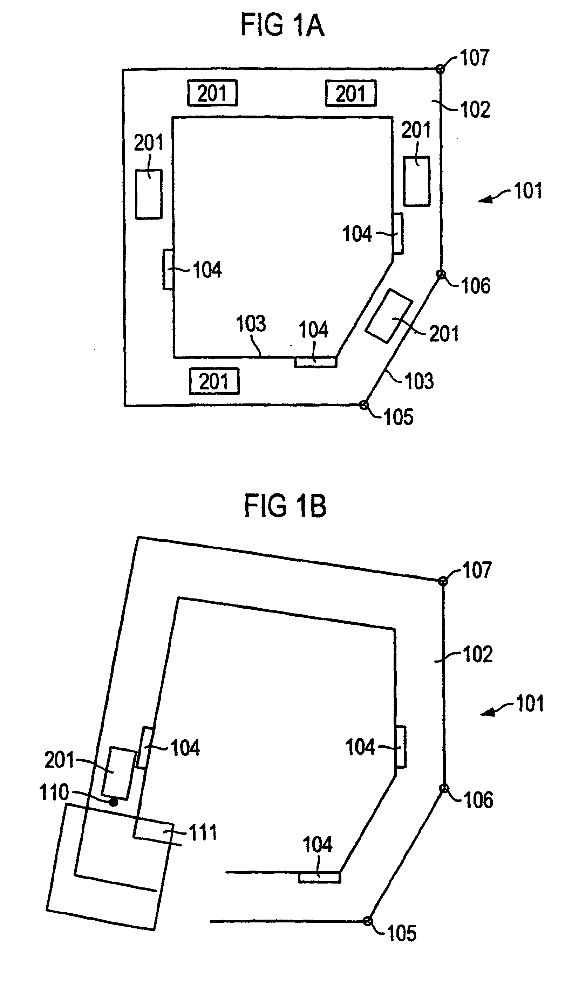

**Fig.1a** zeigt symbolisch eine Landkarte 101, die einen Gang 102 darstellt. Der Roboter 201 bewegt sich durch den Gang und nimmt Bilder seiner Umgebung mit den Laserscannern 202 auf. Dabei nimmt er Wände 103 auf. Der Roboter 201 nimmt zu verschiedenen Zeiten Bilder seiner Umgebung auf, wodurch ein Bild der gesamten Landkarte 101 entsteht.

In dem Gang 102 sind ferner Hindernisse 104 in Form von Regalen oder auch Schränken oder ähnlichen Gegenständen, die in den Gang 102 hineinragen, vorhanden.

Ecken 105, 106, 107 des Gangs 102 werden als Anfangspunkt bzw. Endpunkt einer Wand, die in Form eines Streckenabschnitts gespeichert wird, interpretiert.

**Fig.1b** stellt die Landkarte aus **Fig.1a** dar, wenn nicht, wie bei der in **Fig.1a** dargestellten Situation vorausgesetzt, ideale Aufnahmen gemacht werden, sondern wenn Fehler bei der Aufnahme durch den Roboter 201 passieren.

Der Roboter 201 bewegt sich in dem Gang 102 und nimmt in periodischen Abständen Bilder seiner Umgebung auf. Aufgrund der aufgenommenen Bilder sowie der gespeicherten Landkarte 101 orientiert sich der Roboter 201.

Die Orientierung erfolgt derart, daß der Roboter 201 die Bilder dem Prozessor 209 zuführt. In dem Prozessor 209 wird ein Ähnlichkeitsvergleich von Elementen des aufgenommenen Bildes mit Elementen der auf der gespeicherten, vorgegebenen Landkarte 101 ermittelt und versucht, daraus die aktuelle Position des Roboters 201 zu bestimmen.

Der Roboter 201 befindet sich an einer Position 110 und nimmt mit seinem Laserscanner einen Bildbereich 111 auf. Diesen Bildbereich 111 versucht er in Übereinstimmung mit der gespeicherten Landkarte 101 zu bringen um somit Information zu seiner Orientierung zu ermitteln.

Dies entspricht dem Vergleich einer ersten Struktur, die den aufgenommenen Bildbereich 111 charakterisiert mit mindestens einer vorgegebenen zweiten Struktur aus der vorgegebenen, gespeicherten Landkarte 101.

Zu diesem Zweck wird folgendes Verfahren, welches in **Fig.5** dargestellt ist, durchgeführt.

In einem ersten Schritt 501 werden aus dem aufgenommenen Bild 111 von dem Prozessor 209 Basiselemente extrahiert.

Unter einem Basiselement ist eine Strecke mit einem Anfangspunkt und einem Endpunkt zu verstehen, die jeweils eine Wand in dem Gang 102 repräsentiert. Weitere Basiselemente sind Punkte oder Linien vorgebbarer Form.

Die Extraktion erfolgt mit bekannten Methoden der Bildverarbeitung.

Nach der Extraktion der Basiselemente liegt das Bild vor, symbolisch repräsentiert durch eine Menge definierter Basiselemente.

Jedem Basiselement wird Umgebungsinformation zugeordnet. Die Umgebungsinformation charakterisiert das entsprechende Basiselement und ermöglicht die Identifizierung des jeweiligen Basiselements innerhalb einer Menge aller Basiselemente.

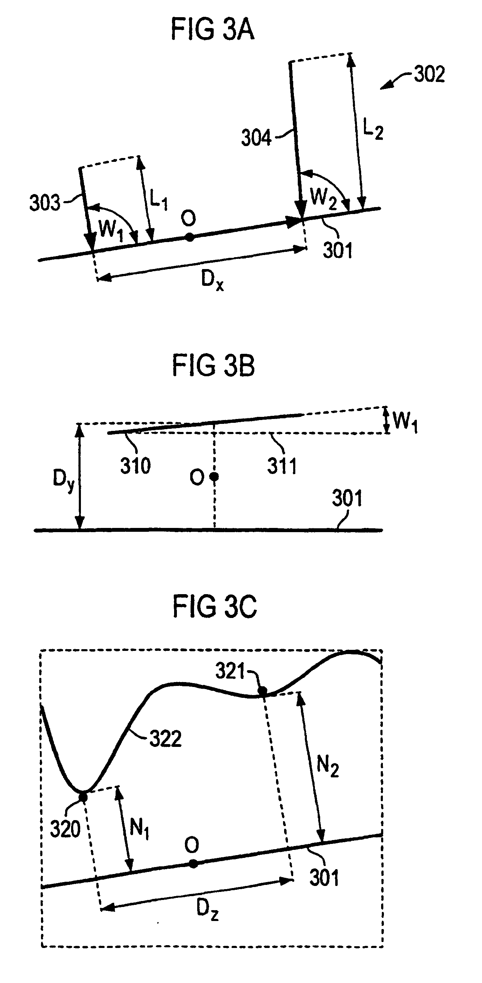

Ein solches Basiselement 301 mit Umgebungsinformation 302, die dem Basiselement zugeordnet ist, ist jeweils in den **Fig.3a** bis **Fig.3c** dargestellt.

Die Umgebungsinformation wird gebildet durch eine Menge weiterer Basiselemente und deren geometrischer Anordnung relativ zueinander sowie zu dem Basiselement 301 selbst.

Die Umgebungsinformation, die dem Basiselement 301 zugeordnet wird, wird derart gebildet, daß sie möglichst invariant ist gegen Fehler, die beim Aufbau der Landkarte 101 durch den Roboter 201 auftreten können.

Es hat sich herausgestellt, daß ein Paar orthogonaler Basiselemente in Form von Strecken sich für das Verfahren besonders gut eignen. Es ist dabei anzumerken, daß es nicht auf eine exakte Orthogonalität der Basiselemente ankommt, sondern eine Toleranz ohne weiteres in Kauf genommen werden kann.

Die Umgebungsinformation, die dem Basiselement 301 zugeordnet wird, ist der Abstand der Schnittpunkte der parallelen Basiselemente mit dem Basiselement 301, in **Fig.3a** mit Dx bezeichnet.

Ferner wird als Umgebungsinformation ein erster Winkel W1, der einen Schnittwinkel eines ersten weiteren Basiselements 303, welches eine Länge L1 aufweist mit dem Basiselement 301, gespeichert.

Ferner wird ein zweiter Winkel W2, der einen Schnittwinkel des zweiten weiteren Basiselements 304 mit dem Basiselement 301 bezeichnet sowie die Länge L2 des zweiten weiteren Basiselements 303 als Umgebungsinformation dem Basiselement 301 zugeordnet.

Weitere, dem Basiselement 301 zugeordnete Umgebungsinformation ist eine Angabe des Startpunkts und/oder eines Endpunkts sowie damit auch eine Orientierung jeweils des ersten und/oder des zweiten Basiselements 303, 304.

Die Umgebungsinformation wird als Liste, die dem Basiselement 301 zugeordnet wird, gespeichert. Die Liste ist in vorgebbarer Weise sortiert.

Das Paar orthogonaler Basiselemente, wie in **Fig.3a** dargestellt als Umgebungsinformation, bildet einen Umgebungsinformationstyp.

Die oben beschriebenen einzelnen Elemente, die als Umgebungsinformation dem Basiselement 301 zugeordnet werden, bilden Umgebungsinformationsmerkmale, die jeweils dem Umgebungsinformationstyp zugeordnet werden.

Ein zweiter Umgebungsinformationstyp ist ein zu dem Basiselement 301 paralleles weiteres Basiselement 310 (vgl. **Fig.3b**).

Wiederum ist keine exakte Parallelität des weiteren Basiselements 310 zu dem Basiselement 301 erforderlich. Als Umgebungsinformationsmerkmale wird ein Abstand Dy zwischen dem Basiselement 301 und dem weiteren, parallelen Basiselement 303 sowie ein dritter Winkel W3, zwischen der exakten Parallele 311 des ersten Basiselements 301, verschoben um den Abstand Dy und der tatsächlichen Lage des weiteren, parallelen Basiselements 310, gespeichert.

**Fig.3c** zeigt einen weiteren Umgebungsinformationstyp in Form von Punkten 320, 321, die Punkte einer Linienstruktur 322 bezeichnen, die am nächsten zu dem Basiselement 301 liegen. In diesem Fall wird ein Abstand zwischen diesen Punkten 320, 321 (bezeichnet als Dz) sowie die kürzesten Abstände N1, N2 der Punkte 320, 321 zu dem Basiselement 301 als Umgebungsinformationsmerkmale gespeichert.

In der vorgegebenen, gespeicherten Landkarte 101 sind den Basiselementen in gleicher Weise jeweils Umgebungsinformationen zugeordnet. Somit weist die gespeicherte Landkarte 101 eine Menge von Basiselementen mit jeweils den Basiselementen zugeordneter Umgebungsinformation in Form von Umgebungsinformationstypen mit den Umgebungsinformationstypen zugeordneten Umgebungsinformationsmerkmalen auf.

Es werden also in einem zweiten Schritt 502 die Umgebungsinformationen jeweils den Basiselementen, die in dem Bildbereich 111 enthalten sind, sowie den in der Landkarte 101 enthaltenen Basiselementen, zugeordnet.

Für jedes Basiselement 301 wird in einem weiteren Schritt 503 mit allen weiteren Basiselementen ein Wert eines Ähnlichkeitsmaßes gebildet.

Im weiteren wird das Ähnlichkeitsmaß näher erläutert.

In diesem Ausführungsbeispiel wird davon ausgegangen, daß ein Gesamtwert U der Umgebungsinformation, die dem Basiselement 301 jeweils zugeordnet ist, sich gemäß folgender Vorschrift ergibt:

$$U = (OP, P, MP),$$

wobei mit

- OP die Umgebungsinformationsmerkmale, die von Paaren von senkrecht zueinander orientierten weiteren Basiselementen gebildet wird,
- P die Umgebungsinformationsmerkmale, gebildet von parallelen Basiselementen, und
- MP die Umgebungsinformationsmerkmale der punktförmigen Umgebungsinformationstypen,

bezeichnet werden.

Die Umgebungsinformationsmerkmale liegen in Form von sortierten Listen vor.

Es sei

$$v: U \times U \rightarrow \mathfrak{R}_0^+$$

eine formale Definition einer Vergleichsfunktion.

Mit der Vergleichsfunktion v wird zu einem Paar von jeweils zwei Basiselementen zugeordneten Umgebungsinformationen ein Vergleichswert berechnet. Je höher der Vergleichswert ist, desto besser stimmen die beiden Umgebungsinformationsmerkmale der Basiselemente miteinander überein. Zur Definition der Vergleichsfunktion v werden folgende drei Funktionen vOP, vP, vMP definiert:

$$vOP: OP \times OP \rightarrow \mathfrak{R}_0^+$$

$$vP: P \times P \rightarrow \mathfrak{R}_0^+$$

$$vMP: MP \times MP \rightarrow \mathfrak{R}_0^+,$$

wobei mit vOP ein Vergleichswert für Umgebungsinformationsmerkmale des Umgebungsinformationstyps mit senkrechten weiteren Basiselementen beschrieben wird und analog mit vP ein Vergleichswert beschrieben wird von Umgebungsinformationsmerkmalen des Umgebungsinformationstyps mit parallelen Basiselementen. Mit vMP wird ein Vergleichswert beschrieben, der Umgebungsinformationsmerkmale des Umgebungsinformationstyps mit Punkten als Umgebungsinformationsmerkmale ermittelt.

Die Vergleichsfunktion v wird als gewichtete Summe der Funktionen vOP, vP und vMP gemäß folgender Vorschrift definiert.

$$v(U1, U2) = aOP * vOP(OP1, OP2) + aP * vP(P1, P2) + aMP *$$

$$* vMP (MP1, MP2).$$

Die Werte aOP, aP und aMP im Zahlenintervall [0,1] werden als Gewichtswerte bezeichnet.

Mit den Gewichtswerten aOP, aP und aMP werden die unterschiedliche Bedeutungen der einzelnen Umgebungsinformationstypen hinsichtlich des Ähnlichkeitsmaßes berücksichtigt. Es hat sich herausgestellt, daß der Umgebungsinformationstyp der Paare von orthogonalen weiteren Basiselementen OP eine höhere Aussagekraft hinsichtlich des Ähnlichkeitsmaßes als der Umgebungsinformationstyp der parallelen weiteren Basiselemente P und dieser wiederum eine höhere Aussagekraft als der Umgebungsinformationstyp mit Punkten als Umgebungsinformationsmerkmalen besitzt.

Für jede Funktion vOP, vP, vMP wird für jedes Basiselement und deren Umgebungsinformationsmerkmale jeweils ein Verfahren der dynamischen Programmierung durchgeführt, wodurch ein Zwischenähnlichkeitswert gebildet wird.

Dies erfolgt jeweils für jede Funktion vOP, vP, vMP unter Verwendung der folgenden Kostenfunktion $D_{i,j}$:

$$D_{i,j} = \min \begin{cases} D_{i-1,j} + \delta \\ D_{i-1,j} - 1 + \mu, \\ D_{i,j-1} + \delta \end{cases}$$

mit

- $\delta$, einem vorgebbaren Kostenwert, der auftritt, wenn ein Umgebungsinformationsmerkmal des aufgenommenen Bildbereichs nicht einem Umgebungsinformationsmerkmal der gespeicherten Landkarte 101 zugeordnet werden kann,
- $\mu = \frac{\delta}{\lambda}$, mit
- 

$$\lambda = \prod_{k=1}^{n} \left( \max \left\{ 0,1 - \frac{|a_{k,i} - a_{k,j}|}{MaxErr_k} \right\} \right).$$

Mit

- k wird ein Index, der jeden Umgebungsinformationstyp, welcher im Rahmen der Dynamischen Programmierung berücksichtigt wird, eindeutig bezeichnet,
- n wird die Anzahl berücksichtigter Basiselemente bezeichnet,
- $a_{k,i}$ und $a_{k,j}$ werden die einzelnen Umgebungsinformationsmerkmale, die in der sortierten Liste der jeweiligen Umgebungsinformationstypen gespeichert sind, bezeichnet, wobei $a_{k,i}$ ein Umgebungsinformationsmerkmal eines Basiselements des Bildbereichs 111 und $a_{k,j}$ ein Umgebungsinformationsmerkmal eines Basiselements der Landkarte 101 bezeichnet,
- $MaxErr_k$ wird ein vorgebbarer, für jeden Umgebungsinformationstyp spezifischer Wert bezeichnet.

Der Kostenwert $\delta$ ist empirisch so zu bestimmen, daß bei der gegebenen Anwendung
$2 \cdot \delta > \mu$ ist, falls die Zuordnung korrekt ist, und
$\mu > 2 \cdot \delta$ ist, falls die Zuordnung nicht korrekt ist.

Es hat sich folgendes Verhältnis der einzelnen Gewichtswerte als vorteilhaft herausgestellt:

$$aOP : aP : aMP = 3 : 2 : 1.$$

Das Ergebnis der Vergleichsfunktion v bildet einen Wert des Ähnlichkeitsmaßes, mit dem die Ähnlichkeit der ersten Struktur in dem Bildbereich 111 und der zweiten Struktur in der Landkarte 101 beschrieben wird (Schritt 503).

In einem weiteren Schritt 504 wird das Paar von Basiselementen aus der ersten Struktur bzw. der zweiten Struktur ausgewählt, welches Paar den höchsten Wert des Zwischenähnlichkeitswerts aufweist und somit am ähnlichsten zueinander ist.

Für die ausgewählten Basiselemente wird ein kanonisches Koordinatensystem in der jeweiligen Landkarte gebildet, dessen Abszisse durch das jeweilige Basiselement gebildet wird (Schritt 505).

In einem weiteren Schritt 506 wird anschließend ein Abbildungsmaß ermittelt. Mit dem Abbildungsmaß wird für die ausgewählten Basiselemente ermittelt, welcher Betrag einer Translation bzw. Rotation erforderlich ist, um das Koordinatensystem für das Basiselement der ersten Struktur jeweils auf ein Koordinatensystem eines Basiselements einer weiteren Struktur abzubilden.

In dem Schritt 506 wird anschaulich also jeweils ermittelt, wie sehr das Koordinatensystem des ausgewählten Basiselements der ersten Struktur verschoben bzw. "gedreht" werden muß, um zu dem Koordinatensystem des ausgewählten Basiselements jeweils einer weiteren Struktur zu "passen".

Es wird der Bereich in der vorgegebenen Landkarte ausgewählt, dessen Abbildungsmaß und/oder dessen Ähnlichkeitsmaß minimal ist verglichen mit dem Koordinatensystem für das Basiselement der ersten Struktur.

Ausgehend von dem ausgewählten Basiselement werden weitere Basiselemente paarweise (d.h. jeweils ein Basiselement der ersten Struktur und ein Basiselement der zweiten Struktur) ausgewählt, deren Werte der Ähnlichkeitsmaße größer sind als ein vorgebbarer Schwellenwert.

Nun ist dem Roboter 201 bekannt, wo er sich innerhalb der Landkarte 101 befindet.

Somit wird in einem letzten Schritt 507 der Bereich in der vorgegebenen Karte 101 bestimmt, in dem der Roboter 201 sich befindet.

Im weiteren werden einige Alternativen des oben beschriebenen Ausführungsbeispiels aufgezeigt:

Das oben beschriebene Verfahren kann auch zum allgemeinen Vergleich zweier Strukturen eingesetzt werden, beispielsweise für den Vergleich eines aufgenommenen Bildes mit einem Modell eines physikalischen Objekts.

Ein Beispiel hierfür ist in dem Modell einer Türklinke zu sehen, welche Türklinke der Roboter 201 greifen soll.

In dem Speicher 208 der Recheneinheit 203 des Roboters 201 ist ein Modell 401 einer Türklinke 402 gespeichert.

Der Strukturvergleich erfolgt auf die oben beschriebene Weise wobei der Scanner des Roboters 201 Bilder seiner Umgebung aufnimmt und nach einer Struktur sucht, die der Struktur des Türklinkenmodells 401 ähnlich ist. Ist eine solche Struktur ermittelt, so kann ein Greifarm 403 des Roboters 201 an der Türklinke 401, die an einer Tür 404 angebracht ist, greifen.

Eine weitere Einsatzmöglichkeit des Verfahrens ist im Bereich von Datenbanken zu sehen. Datenbanken weisen ebenfalls eine Struktur auf, in der die Daten gespeichert sind. Somit kann die Struktur der gespeicherten Datenbank anschaulich auf die oben beschriebene Weise mit einer gesuchten Struktur verglichen werden und durch diese geometrische Interpretation der Struktur einer Datenbank kann ein Ausschnitt der Datenbank ermittelt werden, um im Rahmen einer Recherche eine hohe Zuverlässigkeit der Recherchenergebnisse in der Datenbank zu gewährleisten.

Ferner kann das Verfahren auch zum sukzessiven Aufbau der Landkarte 101 durch den Roboter 201 eingesetzt werden. Dieses Verfahren dient dann dazu, zu überprüfen, wann der Roboter 201 zu einer Stelle gelangt, an der er schon gewesen ist. In diesem Fall vergleicht der Roboter jeweils die Aufnahme eines Bildes mit den gespeicherten Strukturdaten einer sich im Aufbau befindenden Landkarte 101.

Auch kann das Verfahren allgemein im Rahmen der Mustererkennung bzw. Bildverarbeitung eingesetzt werden, wobei der Rechenzeitbedarf zur Durchführung des Verfahrens gegenüber den bekannten Verfahren in der Mustererkennung erheblich reduziert wird.

Im Rahmen dieses Dokuments wurden folgende Veröffentlichungen zitiert:

[1] M. Bierling, Displacement Estimation by Hierarchical Blockmatching, SPIE, Vol. 1001, Visual Communications and Image Processing '88, S. 942 - 951, 1988

[2] O. Karch und H. Noltemeier, Autonome Mobile Systeme 1996, G. Schmidt und F. Freyberger, (Hg.), Zum Lokalisationsproblem für Roboter, Springer Verlag, ISBN 3-54061-751-5, S. 128 - 137, 1996

[3] EP 0 492 512 A (Hughes Aircraft Company)

# EP 1 145 086 B1

**Patentansprüche**

1. Verfahren zur rechnergestützten Ermittlung eines Ähnlichkeitsmaßes einer ersten Struktur mit mindestens einer vorgegebenen zweiten Struktur,

   - bei dem die erste Struktur einen Teil einer physikalischen Umgebung abbildet und die zweite Struktur aus einer vorgegebenen gespeicherten Landkarte stammt,
   - bei dem in der ersten Struktur und in der zweiten Struktur jeweils mindestens ein Basiselement (301) bestimmt wird,
   - bei dem den Basiselementen (301) jeweils eine das entsprechende Basiselement charakterisierende Umgebungsinformation (302) zugeordnet wird, wobei die Umgebungsinformation (302) mindestens gebildet wird durch ein weiteres Basiselement (303) und dessen geometrische Anordnung relativ zu dem jeweiligen Basiselement (302),
   - bei dem für die erste Struktur und die zweite Struktur das Ähnlichkeitsmaß ermittelt wird, indem ein Ähnlichkeitsmaß mindestens eines Basiselements (301) der ersten Struktur mit mindestens einem Basiselement (301) der zweiten Struktur unter Berücksichtigung der den Basiselementen (301) zugeordneten Umgebungsinformation (302) ermittelt wird.

2. Verfahren nach Anspruch 1,
   bei dem mehrere Basiselemente in den Strukturen enthalten sind.

3. Verfahren nach Anspruch 1 oder 2,
   bei dem die Strukturen in mindestens einer Landkarte enthalten sind.

4. Verfahren nach Anspruch 3,
   bei dem die Landkarte mit einem Aufnahmemittel aufgenommen wird.

5. Verfahren nach Anspruch 4,
   bei dem die Landkarte mit einem Scanner aufgenommen wird.

6. Verfahren nach Anspruch 4,
   bei dem die Landkarte mit einer Kamera aufgenommen wird.

7. Verfahren nach einem der Ansprüche 1 bis 6,
   bei dem das Ähnlichkeitsmaß aufgrund mehrerer Basiselemente und deren jeweils zugeordneter Umgebungsinformation ermittelt wird.

8. Verfahren nach einem der Ansprüche 1 bis 7,
   bei dem zumindest ein Teil der Basiselemente jeweils eine Linie vorgebbarer Form ist.

9. Verfahren nach Anspruch 8,
   bei dem zumindest ein Teil der Basiselemente jeweils eine Strecke ist.

10. Verfahren nach einem der Ansprüche 1 bis 7,
    bei dem zumindest ein Teil der Basiselemente jeweils ein Punkt ist.

11. Verfahren nach einem der Ansprüche 1 bis 10,
    bei dem die Basiselemente unterschiedliche Formen aufweisen.

12. Verfahren nach einem der Ansprüche 1 bis 11,
    bei dem mindestens ein Teil der Umgebungsinformation derart gebildet wird, daß sie invariant ist gegen Fehler, die beim Aufbau der Landkarte auftreten.

13. Verfahren nach einem der Ansprüche 1 bis 12,
    bei dem die weiteren Basiselemente in mehrere Umgebungsinformationstypen gruppiert werden, die Umgebungsinformationsmerkmale enthalten, die jeweils einem Umgebungsinformationstyp zugeordnet werden.

14. Verfahren nach Anspruch 13,

bei dem die einem Umgebungsinformationstypen zugeordneten Umgebungsinformationsmerkmale in einer Liste in einer vorgebbaren Weise sortiert gespeichert werden

**15.** Verfahren nach einem der Ansprüche 1 bis 14,
bei dem das Ähnlichkeitsmaß mittels Dynamischer Programmierung gebildet wird.

**16.** Verfahren nach einem der Ansprüche 1 bis 15,
bei dem das Verfahren für mehrere weitere Strukturen durchgeführt wird, wobei jeweils ein Ähnlichkeitsmaß der ersten Struktur mit jeweils einer weiteren Struktur ermittelt wird.

**17.** Verfahren nach Anspruch 16,
bei dem das Verfahren mehrfach durchgeführt wird für unterschiedliche Basiselemente, womit mehrere Ähnlichkeitsmaße gebildet werden.

**18.** Verfahren nach Anspruch 16 oder 17,

- bei dem die Basiselemente der ersten Struktur und der weiteren Strukturen, welche die größte Übereinstimmung aufweisen, ausgewählt werden,
- bei dem ausgehend von dem ausgewählten Basiselement in jeder Struktur jeweils ein lokales Koordinatensystem gebildet wird,
- bei dem abhängig von der Abbildung des Koordinatensystems der ersten Struktur auf das Koordinatensystem der zweiten Struktur ein Abbildungsmaß gebildet wird,
- bei dem abhängig von dem Abbildungsmaß die Struktur bestimmt wird, die das geringste Abbildungsmaß aufweist.

**19.** Verfahren nach Anspruch 18,
bei dem das Abbildungsmaß eine Rotation des lokalen Koordinatensystems von der ersten Struktur auf die jeweilige weitere Struktur beschreibt.

**20.** Verfahren nach einem der Ansprüche 1 bis 19,
bei dem die Strukturen Datenstrukturen in einer Datenbank beschreiben.

**21.** Verfahren nach einem der Ansprüche 1 bis 19,
bei dem die Strukturen jeweils ein physikalisches Objekt beschreiben.

**22.** Verfahren nach einem der Ansprüche 1 bis 19,
bei dem die erste Struktur ein physikalisches Objekt beschreibt und die zweite Struktur ein Modell eines physikalischen Objekts.

**23.** Verfahren nach einem der Ansprüche 1 bis 19,
eingesetzt zur Ermittlung einer Landkarte für eine mobile autonome Vorrichtung.

**24.** Verfahren nach einem der Ansprüche 1 bis 19,
eingesetzt zur Orientierung einer mobilen autonome Vorrichtung.

**25.** Verfahren nach Anspruch 23 oder 24,
bei dem die mobile autonome Vorrichtung ein Roboter ist.

**26.** Anordnung zur rechnergestützten Ermittlung eines Ähnlichkeitsmaßes einer ersten Struktur mit mindestens einer vorgegebenen zweiten Struktur, bei dem die erste Struktur einen Teil einer physikalischen Umgebung abbildet und die zweite Struktur aus einer vorgegebenen gespeicherten Landkarte stammt, mit einem Prozessor, der derart eingerichtet ist, daß folgende Schritte durchführbar sind:

- in der ersten Struktur und in der zweiten Struktur werden jeweils mindestens ein Basiselement (301) bestimmt,
- den Basiselementen (301) wird jeweils eine das entsprechende Basiselement (301) charakterisierende Umgebungsinformation (302) zugeordnet, wobei die Umgebungsinformation (302) mindestens gebildet wird durch ein weiteres Basiselement (303) und dessen geometrische Anordnung relativ zu dem jeweiligen Basiselement (301),

- für die erste Struktur und die zweite Struktur wird das Ähnlichkeitsmaß ermittelt; indem ein Ähnlichkeitsmaß mindestens eines Basiselements (301) der ersten Struktur mit mindestens einem Basiselement der zweiten Struktur unter Berucksichtigung der den Basiselementen (301) zugeordneten Umgebungsinformationen (302) ermittelt wird.

27. Anordnung nach Anspruch 26,
   bei der mehrere Basiselemente in den Strukturen enthalten sind.

28. Anordnung nach Anspruch 26 oder 27,
   bei der die Strukturen in mindestens einer Landkarte enthalten sind.

29. Anordnung nach Anspruch 28,
   mit einem Aufnahmemittel zur Aufnahme der Landkarte.

30. Anordnung nach Anspruch 29,
   mit einem Scanner zur Aufnahme der Landkarte.

31. Anordnung nach Anspruch 30,
   mit einer Kamera zur Aufnahme der Landkarte.

32. Anordnung nach einem der Ansprüche 26 bis 31,
   bei der das Ähnlichkeitsmaß aufgrund mehrerer Basiselemente und deren jeweils zugeordneter Umgebungsinformation ermittelt wird.

33. Anordnung nach einem der Ansprüche 26 bis 32,
   bei der der Prozessor derart eingerichtet ist, daß zumindest ein Teil der Basiselemente jeweils eine Linie vorgebbarer Form ist.

34. Anordnung nach Anspruch 33,
   bei der der Prozessor derart eingerichtet ist, daß zumindest ein Teil der Basiselemente jeweils eine Strecke ist.

35. Anordnung nach einem der Ansprüche 26 bis 34,
   bei der der Prozessor derart eingerichtet ist, daß zumindest ein Teil der Basiselemente jeweils ein Punkt ist.

36. Anordnung nach einem der Ansprüche 26 bis 35,
   bei der der Prozessor derart eingerichtet ist, daß die Basiselemente unterschiedliche Formen aufweisen.

37. Anordnung nach einem der Ansprüche 26 bis 36,
   bei der der Prozessor derart eingerichtet ist, daß'mindestens ein Teil der Umgebungsinformation derart gebildet wird, daß sie invariant ist gegen Fehler, die beim Aufbau der Landkarte auftreten.

38. Anordnung nach einem der Ansprüche 35 bis 37,
   bei der der Prozessor derart eingerichtet ist, daß die weiteren Basiselemente in mehrere Umgebungsinformationstypen gruppiert werden, die Umgebungsinformationsmerkmale enthalten, die jeweils einem Umgebungsinformationstyp zugeordnet werden.

39. Anordnung nach Anspruch 38,
   bei der der Prozessor derart eingerichtet ist, daß die einem Umgebungsinformationstypen zugeordneten Umgebungsinformationsmerkmale in einer Liste in einer vorgebbaren Weise sortiert gespeichert werden

40. Anordnung nach einem der Ansprüche 26 bis 39,
   bei der der Prozessor derart eingerichtet ist, daß das Ähnlichkeitsmaß mittels Dynamischer Programmierung gebildet wird.

41. Anordnung nach einem der Ansprüche 26 bis 40,
   bei der der Prozessor derart eingerichtet ist, daß das Verfahren für mehrere weitere Strukturen durchgeführt wird, wobei jeweils ein Ähnlichkeitsmaß der ersten Struktur mit jeweils einer weiteren Struktur ermittelt wird.

**42.** Anordnung nach Anspruch 41,
bei der der Prozessor derart eingerichtet ist, daß das Verfahren mehrfach durchgeführt wird für unterschiedliche Basiselemente, womit mehrere Ähnlichkeitsmaße gebildet werden.

**43.** Anordnung nach Anspruch 41 oder 42,
bei der der Prozessor derart eingerichtet ist, daß

- die Basiselemente der ersten Struktur und der weiteren Strukturen, welche die größte Übereinstimmung aufweisen, ausgewählt werden,
- ausgehend von dem ausgewählten Basiselement in jeder Struktur jeweils ein lokales Koordinatensystem gebildet wird,
- abhängig von der Abbildung des Koordinatensystems der ersten Struktur auf das Koordinatensystem der zweiten Struktur ein Abbildungsmaß gebildet wird,
- abhängig von dem Abbildungsmaß die Struktur bestimmt wird, die das geringste Abbildungsmaß aufweist.

**44.** Anordnung nach Anspruch 43,
bei der der Prozessor derart eingerichtet ist, daß das Abbildungsmaß eine Rotation des lokalen Koordinatensystems von der ersten Struktur auf die jeweilige weitere Struktur beschreibt.

**45.** Anordnung nach einem der Ansprüche 26 bis 44,
bei der der Prozessor derart eingerichtet ist, daß die Strukturen Datenstrukturen in einer Datenbank beschreiben.

**46.** Anordnung nach einem der Ansprüche 26 bis 44,
bei der der Prozessor derart eingerichtet ist, daß die Strukturen jeweils ein physikalisches Objekt beschreiben.

**47.** Anordnung nach einem der Ansprüche 26 bis 44,
bei der der Prozessor derart eingerichtet ist, daß die erste Struktur ein physikalisches Objekt beschreibt und die zweite Struktur ein Modell eines physikalischen Objekts.

**48.** Anordnung nach einem der Ansprüche 26 bis 44, eingesetzt zur Ermittlung einer Landkarte für eine mobile autonome Vorrichtung.

**49.** Anordnung nach einem der Ansprüche 26 bis 48,
eingesetzt zur Orientierung einer mobilen autonome Vorrichtung.

**50.** Anordnung nach Anspruch 48 oder 49,
bei der die mobile autonome Vorrichtung ein Roboter ist.

**Claims**

**1.** A method for the computer -aided determination of a degree of similarity between a first structure and at least one predetermined second structure,

- wherein the first structure represents one part of a physical environment and the second structure originates from a predetermined stored map,
- wherein in the first structure and in the second structure respectively at least one basic element (301) is determined,
- wherein environment information (302) characterizing the respective basic element is assigned to each of the basic elements (301), the environment information (302) at least being formed by one further basic element (303) and its geometrical arrangement relative to the respective basic element (302),
- wherein the degree of similarity is determined for the first structure and the second structure, in that a degree of similarity is determined between at least one basic element (301) of the first structure and at least one basic element (301) of the second structure, t aking into account the environment information (302) assigned to the basic elements (301).

**2.** A method according to Claim 1,
wherein several basic elements are contained in the structures.

3. A method according to Claim 1 or Claim 2,
   wherein the structures are contained in at least one map.

4. A method according to C laim 3,
   wherein the map is recorded with a recording means.

5. A method according to Claim 4,
   wherein the map is recorded with a scanner.

6. A method according to C laim 4,
   wherein the map is recorded with a camera.

7. A method according to any one of Claims 1 to 6,
   wherein the degree of similarity is determined on the basis of several basic elements and the environment information assigned to each of them.

8. A method according to any one of Claims 1 to 7,
   wherein at least one part of the basic elements is in each case a line of predeterminable form.

9. A method according to Claim 8,
   wherein at least one part of the basic elements is in each case a line segment.

10. A method according to any one of Claims 1 to 7,
    wherein at least one part of the basic elements is in each case a point.

11. A method according to any one of Claims 1 to 10,
    wherein the basic elements have differing forms.

12. A method according to any one of Claim s 1 to 11,
    wherein at least one part of the environment information is formed in such a manner that it is invariant in relation to errors which occur when the map is built up.

13. A method according to any one of Claims 1 to 12,
    wherein the further basic elements are grouped in several environment information types containing environment information features which are each assigned to one environment information type.

14. A method according to Claim 13,
    wherein the environment information features assigned to one environment information type are stored in a list sorted in a predeterminable manner.

15. A method according to any one of Claims 1 to 14,
    wherein the degree of similarity is formed by means of Dynamic Programming.

16. A method according to any one of Claims 1 to 15,
    wherein the method is implemented for several other structures, one degree of similarity being determined in each case between the first structure and one further structure in each case.

17. A method according to Claim 16,
    wherein the method is implemented repeatedly for different basic elements, whereby several degrees of similarity of formed.

18. A method according to Claim 16 or 17,

    - wherein the basic elements of the first structure and of the further structures which have t he greatest match are selected,
    - wherein, starting from the basic element selected in each structure, a local system of coordinates is formed in each case,
    - wherein, depending on the mapping of the system of coordinates of the first structure on to the syste m of

**EP 1 145 086 B1**

coordinates of the second structure, a degree of mapping is formed,
- wherein, depending on the degree of mapping, the structure which has the smallest degree of mapping is determined .

19. A method according to Claim 18,
wherein the degree of mapping describes a rotation of the local system of coordinates from the first structure to the respective further structure.

20. A method according to any one of Claims 1 to 19,
wherein the structures describe data structures in a database.

21. A method according to any one of Claims 1 to 19,
wherein the structures in each case describe a physical object.

22. A method according to any one of Claims 1 to 19,
wherein the first structure describes a physical object and the second structure a model of a physical object.

23. A method according to any one of Claims 1 to 19,
used to determine a map for a mobile autonomous device.

24. A method according to any one of Claims 1 to 19,
used for orienting a mobile autonomous device.

25. A method according to Claim 23 or Claim 24,
wherein the mobile autonomous device is a robot.

26. An arrangement for the computer -aided determination of a degree of similarity between a first structure and at least one predetermined second structure, wherein the first structure maps one part of a physical environment and the second structure originates from a predetermined stored map, comprising a processor which is set up such that the following steps can be implemented:

- in the first structure and in the second structure at least on e basic element (301) is determined in each case,
- environment information (302) characterizing the respective basic element (301) is assigned to each of the basic elements (301), the environment information (302) at least being formed by one further basic element (303) and its geometrical arrangement relative to the respective basic element (301),
- the degree of similarity is determined for the first structure and the second structure, in that a degree of similarity is determined between at least one basic e lement (301) of the first structure and at least one basic element of the second structure, taking into account the environment information (302) assigned to the basic elements (301).

27. An arrangement according to Claim 26,
wherein several basic elements are contained in the structures.

28. An arrangement according to Claim 26 or 27,
wherein the structures are contained in at least one map.

29. An arrangement according to Claim 28,
comprising a recording means for recording the map.

30. An arrangement according to Claim 29,
comprising a scanner for recording the map.

31. An arrangement according to Claim 30,
comprising a camera for recording the map.

32. An arrangement according to any one of Claims 26 to 31,
wherein the degree of similarity is determined on the basis of several basic elements and the environment information assigned to each of them.

13

**33.** An arrangement according to any one of Claims 26 to 32,
wherein the processor is set up such that at least one part of the basic elements is in each case a line of predeterminable form.

**34.** An arrangement according to Claim 33,
wherein the processor is set up such that at least one part of the basic elements is in each case a line segment.

**35.** An arrangement according to any one of Claims 2 6 to 34,
wherein the processor is set up such that at least one part of the basic elements is in each case a point.

**36.** An arrangement according to any one of Claims 26 to 35,
wherein the processor is set up such that the basic elements have differing forms.

**37.** An arrangement according to any one of Claims 26 to 36,
wherein the processor is set up such that at least one part of the environment information is formed such that it is invariant in relation to errors which occur when building up the map.

**38.** An arrangement according to any one of Claims 35 to 37,
wherein the processor is set up such that the further basic elements are grouped in several environment information types containing environment information features which are each assigned to one environment information type.

**39.** An arrangement according to Claims 38,
wherein the processor is set up such that the environment information features assigned to an environment information type are stored in a list sorted in a predeterminable manner.

**40.** An arrangement according to any one of Claims 26 to 39,
wherein the processor is set up such that the degree of similarity is formed by means of Dynamic Programming.

**41.** An arrangement according to any one of Claims 26 to 40,
wherein the processor is set up such that the method is implemented for several further structures, a degree of similarity being determined in each case between the first structure and one further structure in each case.

**42.** An arrangement according to Claim 41,
wherein the processor is set up such that the method is implemented several times for different basic elements, as a result of which several degrees of similarity are formed.

**43.** An arrangement according to Claim 41 or Claim 42,
wherein the processor is set up such t hat

- the basic elements of the first structure and of the further structures which have the greatest match are selected,
- starting from the basic element selected in each structure , a local system of coordinates is formed in each case,
- depending on the mapping of the system of coordinates of the first structure onto the system of coordinates of the second structure, a degree of mapping is formed,
- depending on the degree of mapping, the structure which has the smallest degree of mapping is determined.

**44.** An arrangement according to Claim 43,
wherein the processor is set up such that the degree of mapping describes a rotation of the local system of coordinates from the first structure onto the respective further structure.

**45.** An arrangement according to an y one of Claims 26 to 44,
wherein the processor is set up such that the structures describe data structures in a database.

**46.** An arrangement according to any one of Claims 26 to 44,
wherein the processor is set up such that the structures in each case describe a physical object.

**47.** An arrangement according to any one of Claims 26 to 44,
wherein the processor is set up such that the first structure describes a physical object and the second structure a model of a physical object.

**48.** An arrangement according to any one of Claims 26 to 44,
used for determining a map for a mobile autonomous device.

**49.** An arrangement according to any one of Claims 26 to 48, used for orienting a mobile autonomous device.

**50.** An arrangement according to Claim 48 or 49,
wherein the mobile autonomous device is a robot.

**Revendications**

**1.** Procédé pour la détermination automatisée d'une dimension de similitude d'une première structure avec au moins une seconde structure prévue,

- dans lequel la première structure reproduit une partie d'un environnement physique et la seconde structure provient d'une carte géographique mémorisée prédéfinie,
- dans lequel à chaque fois au moins un élément de base (301) est déterminé dans la première structure et dans la seconde structure,
- dans lequel on attribue à chacun des éléments de base (301) une information sur l'environnement (302) caractérisant l'élément de base concerné, l'information sur l'environnement (302) étant formée au moins par un autre élément de base (303) et sa disposition géométrique par rapport à l'élément de base (302) concerné,
- dans lequel on détermine la dimension de similitude pour la première structure et la seconde structure en déterminant une dimension de similitude d'au moins un élément de base (301) de la première structure avec au moins un élément de base (301) de la seconde structure en tenant compte de l'information sur l'environnement (302) attribuée aux éléments de base (301).

**2.** Procédé selon la revendication 1,
dans lequel plusieurs éléments de base sont inclus dans les structures.

**3.** Procédé selon la revendication 1 ou 2,
dans lequel les structures sont contenues dans au moins une carte géographique.

**4.** Procédé selon la revendication 3,
dans lequel la carte géographique est enregistrée avec un moyen de prise de vue.

**5.** Procédé selon la revendication 4,
dans lequel la carte géographique est enregistrée avec un scanner.

**6.** Procédé selon la revendication 4,
dans lequel la carte géographique est enregistrée avec une caméra.

**7.** Procédé selon l'une quelconque des revendications 1 à 6,
dans lequel la dimension de similitude est déterminée sur la base de plusieurs éléments de base et de leur information sur l'environnement respectivement attribuée.

**8.** Procédé selon l'une quelconque des revendications 1 à 7,
dans lequel au moins une partie des éléments de base est à chaque fois une ligne de forme prédéfinissable.

**9.** Procédé selon la revendication 8,
dans lequel au moins une partie des éléments de base est à chaque fois un tronçon.

**10.** Procédé selon l'une quelconque des revendications 1 à 7,
dans lequel au moins une partie des éléments de base est à chaque fois un point.

**11.** Procédé selon l'une quelconque des revendications 1 à 10,
dans lequel les éléments de base présentent différentes formes.

**12.** Procédé selon l'une quelconque des revendications 1 à 11,

dans lequel au moins une partie de l'information sur l'environnement est formée de telle sorte qu'elle est invariable par rapport à des erreurs qui surviennent lors de l'élaboration de la carte géographique.

**13.** Procédé selon l'une quelconque des revendications 1 à 12,
dans lequel les autres éléments de base sont groupés en plusieurs types d'information sur l'environnement qui contiennent des caractéristiques d'information sur l'environnement qui sont attribuées respectivement à un type d'information sur l'environnement.

**14.** Procédé selon la revendication 13,
dans lequel les caractéristiques d'information sur l'environnement attribuées à un type d'information sur l'environnement sont mémorisées dans une liste triées d'une façon prédéfinissable.

**15.** Procédé selon l'une quelconque des revendications 1 à 14,
dans lequel la dimension de similitude est formée au moyen d'une programmation dynamique.

**16.** Procédé selon l'une quelconque des revendications 1 à 15,
dans lequel le procédé est appliqué pour plusieurs autres structures, une dimension de similitude de la première structure étant à chaque fois déterminée avec respectivement une autre structure.

**17.** Procédé selon la revendication 16,
dans lequel le procédé est appliqué plusieurs fois pour différents éléments de base, de sorte que plusieurs dimensions de similitude sont formées.

**18.** Procédé selon la revendication 16 ou 17,

- dans lequel on choisit les éléments de base de la première structure et des autres structures qui présentent la plus grande concordance,
- dans lequel on forme à chaque fois un système local de coordonnées à partir de l'élément de base choisi dans chaque structure,
- dans lequel une dimension de reproduction est formée en fonction de la reproduction du système de coordonnées de la première structure sur le système de coordonnées de la seconde structure,
- dans lequel on détermine en fonction de la dimension de reproduction la structure qui présente la plus faible dimension de reproduction.

**19.** Procédé selon la revendication 18,
dans lequel la dimension de reproduction crée une rotation du système local de coordonnées de la première structure sur l'autre structure respective.

**20.** Procédé selon l'une quelconque des revendications 1 à 19,
dans lequel les structures décrivent des structures de données dans une banque de données.

**21.** Procédé selon l'une quelconque des revendications 1 à 19,
dans lequel les structures décrivent chacune un objet physique.

**22.** Procédé selon l'une quelconque des revendications 1 à 19,
dans lequel la première structure décrit un objet physique et la seconde structure un modèle d'un objet physique.

**23.** Procédé selon l'une quelconque des revendications 1 à 19,
utilisé pour la détermination d'une carte géographique pour un dispositif autonome mobile.

**24.** Procédé selon l'une quelconque des revendications 1 à 19,
utilisé pour l'orientation d'un dispositif autonome mobile.

**25.** Procédé selon la revendication 23 ou 24,
dans lequel le dispositif autonome mobile est un robot.

**26.** Dispositif pour la détermination automatisée d'une dimension de similitude d'une première structure avec au moins une seconde structure prédéfinie, dans lequel la première structure reproduit une partie d'un environnement physique et la seconde structure provient d'une carte géographique mémorisée prédéfinie, comprenant un processeur qui est aménagé de telle sorte que les étapes suivantes peuvent être réalisées :

- à chaque fois au moins un élément de base (301) est déterminé dans la première structure et dans la seconde structure,
- une information sur l'environnement (302) caractérisant l'élément de base (301) correspondant est attribuée à chacun des éléments de base (301), l'information sur l'environnement (302) étant au moins formée par un autre élément de base (303) et sa disposition géométrique par rapport à l'élément de base (301) respectif,
- pour la première structure et la seconde structure, on détermine la dimension de similitude en déterminant une dimension de similitude d'au moins un élément de base (301) de la première structure avec au moins un élément de base de la seconde structure en tenant compte des informations sur l'environnement (302) attribuées aux éléments de base (301).

**27.** Dispositif selon la revendication 26,
dans lequel plusieurs éléments de base sont inclus dans les structures.

**28.** Dispositif selon la revendication 26 ou 27,
dans lequel les structures sont incluses dans au moins une carte géographique.

**29.** Dispositif selon la revendication 28,
avec un moyen de prise de vue pour l'enregistrement de la carte géographique.

**30.** Dispositif selon la revendication 29,
comprenant un scanner pour l'enregistrement de la carte géographique.

**31.** Dispositif selon la revendication 30,
comprenant une caméra pour l'enregistrement de la carte géographique.

**32.** Dispositif selon l'une quelconque des revendications 26 à 31,
dans lequel la dimension de similitude est déterminée sur la base de plusieurs éléments de base et de leur information sur l'environnement respectivement attribuée.

**33.** Dispositif selon l'une quelconque des revendications 26 à 32,
dans lequel le processeur est aménagé de telle sorte qu'au moins une partie des éléments de base est à chaque fois une ligne de forme prédéfinissable.

**34.** Dispositif selon la revendication 33,
dans lequel le processeur est aménagé de telle sorte qu'au moins une partie des éléments de base est à chaque fois un tronçon.

**35.** Dispositif selon l'une quelconque des revendications 26 à 34,
dans lequel le processeur est aménagé de telle sorte qu'au moins une partie des éléments de base est à chaque fois un point.

**36.** Dispositif selon l'une quelconque des revendications 26 à 35,
dans lequel le processeur est aménagé de telle sorte que les éléments de base présentent différentes formes.

**37.** Dispositif selon l'une quelconque des revendications 26 à 36,
dans lequel le processeur est aménagé de telle sorte qu'au moins une partie de l'information sur l'environnement est formée de telle sorte qu'elle est invariable vis-à-vis des erreurs qui surviennent lors de l'établissement de la carte géographique.

**38.** Dispositif selon l'une quelconque des revendications 35 à 37,
dans lequel le processeur est aménagé de telle sorte que les autres éléments de base sont groupés en plusieurs types d'information sur l'environnement qui contiennent des caractéristiques d'information sur l'environnement qui sont attribuées respectivement à un type d'information sur l'environnement.

**39.** Dispositif selon la revendication 38,

dans lequel le processeur est aménagé de telle sorte que les caractéristiques d'information sur l'environnement attribuées à un type d'information sur l'environnement sont mémorisées dans une liste, triées d'une façon prédéfinissable.

**40.** Dispositif selon l'une quelconque des revendications 26 à 39,
dans lequel le processeur est aménagé de telle sorte que la dimension de similitude est formée au moyen d'une programmation dynamique.

**41.** Dispositif selon l'une quelconque des revendications 26 à 40,
dans lequel le processeur est aménagé de telle sorte que le procédé est appliqué pour plusieurs autres structures, à chaque fois une dimension de similitude de la première structure étant déterminée avec respectivement une autre structure.

**42.** Dispositif selon la revendication 41,
dans lequel le processeur est aménagé de telle sorte que le procédé est appliqué plusieurs fois pour différents éléments de base, de sorte que plusieurs dimensions de similitude sont formées.

**43.** Dispositif selon la revendication 41 ou 42,
dans lequel le processeur est aménagé de telle sorte que

- on choisit les éléments de base de la première structure et des autres structures qui présentent la plus grande concordance,
- on forme à chaque fois un système local de coordonnées à partir de l'élément de base choisi dans chaque structure,
- on forme une dimension de reproduction en fonction de la reproduction du système de coordonnées de la première structure sur le système de coordonnées de la seconde structure,
- on détermine en fonction de la dimension de reproduction la structure qui présente la plus faible dimension de reproduction.

**44.** Dispositif selon la revendication 43,
dans lequel le processeur est aménagé de telle sorte que la dimension de reproduction décrit une rotation du système local de coordonnées de la première structure sur l'autre structure respective.

**45.** Dispositif selon l'une quelconque des revendications 26 à 44,
dans lequel le processeur est aménagé de telle sorte que les structures décrivent des structures de données dans une banque de données.

**46.** Dispositif selon l'une quelconque des revendications 26 à 44,
dans lequel le processeur est aménagé de telle sorte que les structures décrivent à chaque fois un objet physique.

**47.** Dispositif selon l'une quelconque des revendications 26 à 44,
dans lequel le processeur est aménagé de telle sorte que la première structure décrit un objet physique et la seconde structure un modèle d'un objet physique.

**48.** Dispositif selon l'une quelconque des revendications 26 à 44,
utilisé pour la détermination d'une carte géographique pour un dispositif autonome mobile.

**49.** Dispositif selon l'une quelconque des revendications 26 à 48,
utilisé pour l'orientation d'un dispositif autonome mobile.

**50.** Dispositif selon la revendication 48 ou 49,
sur lequel le dispositif autonome mobile est un robot.

## FIG 1A

## FIG 1B

# FIG 2

# FIG 4

## FIG 3A

## FIG 3B

## FIG 3C

# FIG 5

Extrahieren von Basiselementen —501

Zuordnen von Umgebungsinformation zu den Basiselementen —502

Für jedes Basiselement Ähnlichkeitsmaß berechnen mit gespeicherten Basiselementen —503

Wähle Basiselemente mit maximalem Ähnlichkeitswert —504

Bilde Koordinatensysteme mit ausgewählten Basiselementen als Abszisse —505

Ermittle Abbildungsmaße —506

Wähle Bereich aus —507